(19) Europäisches Patentamt
European Patent Office
Office européen des brevets

(11) **EP 3 882 049 B1**

(12) **EUROPEAN PATENT SPECIFICATION**

(45) Date of publication and mention
of the grant of the patent:
**19.06.2024  Bulletin 2024/25**

(21) Application number: **19896119.5**

(22) Date of filing: **12.12.2019**

(51) International Patent Classification (IPC):
*B60C 3/04* *(2006.01)*      *B60C 9/00* *(2006.01)*
*B60C 9/04* *(2006.01)*      *B60C 9/08* *(2006.01)*
*B60C 9/22* *(2006.01)*      *B60C 9/26* *(2006.01)*
*B60C 9/20* *(2006.01)*

(52) Cooperative Patent Classification (CPC):
**B60C 9/08; B60C 3/04; B60C 9/0007;
B60C 9/2009; B60C 9/2204;** B60C 2009/0425;
B60C 2009/0441; B60C 2009/0466; B60C 2009/266

(86) International application number:
**PCT/JP2019/048653**

(87) International publication number:
**WO 2020/122169 (18.06.2020 Gazette 2020/25)**

(54) **PNEUMATIC TIRE**

LUFTREIFEN

BANDAGE PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **13.12.2018   JP 2018233867**

(43) Date of publication of application:
**22.09.2021   Bulletin 2021/38**

(73) Proprietor: **BRIDGESTONE CORPORATION**
**Chuo-ku**
**Tokyo 104-8340 (JP)**

(72) Inventors:
• **SUZUKI, Kohei**
**Tokyo 104-8340 (JP)**
• **HASHIMOTO, Masayuki**
**Tokyo 104-8340 (JP)**
• **KAWASHIMA, Keisuke**
**Tokyo 104-8340 (JP)**

(74) Representative: **Marks & Clerk LLP**
**15 Fetter Lane**
**London EC4A 1BW (GB)**

(56) References cited:
EP-A1- 2 738 016        WO-A1-2015/155992
JP-A- H05 162 506       JP-A- 2001 088 502
JP-A- 2002 178 720      JP-A- 2009 190 546
JP-A- 2010 001 006      JP-A- 2017 043 202
JP-U- S5 858 903        US-A1- 2001 050 126

**Description**

[Technical Field]

The present invention relates to a small-diameter pneumatic tire having improved load-carrying capacity.

[Background Art]

Conventionally, a pneumatic tire with a reduced diameter while increasing the load-carrying capacity (maximum load capacity) is known (see to Patent Literature 1.). According to the pneumatic tire, the space of a small vehicle can be saved and a wide riding space can be secured. Attention is also drawn to the disclosure of US200 1/050 126A1.

[Citation List]

[Patent Literature]

[Patent Literature 1] Japanese Unexamined Patent Application Publication No. 2018 -138435

[Summary of Invention]

In recent years, a new small shuttle buses have been proposed with an emphasis on the transportation of people and goods within city. Such a small shuttle bus has a total length of about 5 meters and a total width of about 2 meters, and the total vehicle weight is assumed to exceed 3 tons. For the pneumatic tire mounted on such a small shuttle bus, space saving is required while providing necessary load-carrying capacity.

In addition, the pneumatic tire mounted to such a small shuttle bus requires a higher load-carrying capacity than the conventional small diameter tire described above.

Furthermore, since it is assumed that an electric motor, especially an in-wheel motor, is used as a power unit from the trend of the times, there is a demand to increase the rim diameter of the tire while suppressing the outer diameter of the tire.

Accordingly, an object of the present invention is to provide a pneumatic tire having a load-carrying capacity and a high space efficiency.

The present invention provides a pneumatic tire as claimed in claim 1.

[Brief Description of Drawings]

FIG. 1 is an overall schematic side view of a vehicle 1 to which a pneumatic tire 10 is mounted.
FIG. 2 is a cross-sectional view of the pneumatic tire 10 and a rim wheel 100.
FIG. 3 is a cross-sectional view of the sole pneumatic tire 10.
FIG. 4 shows a typical tire size positioning based on a combination of a tire shape (tire outer diameter OD and tire width SW) and a rim wheel shape (rim diameter RD and rim width RW).
FIG. 5 is a cross-sectional view of a pneumatic tire 10 A according to a modified example.
FIG. 6A is a perspective view of a sole belt layer 50 A during manufacturing.
FIG. 6B is a perspective view of a sole belt layer 50 A after manufacturing.
FIG. 7 is a partial perspective view of a carcass 40 provided in the pneumatic tire 10 A.
FIG. 8 is a diagram schematically showing a cross-sectional shape of a carcass cord 40 a.
FIG. 9 is a cross-sectional view of a pneumatic tire 10 B according to another modified example.

[Description of Embodiments]

Embodiments will be described below with reference to the drawings. The same functions and configurations are denoted by the same or similar reference numerals, and descriptions thereof are omitted as appropriate.

(1) Schematic configuration of vehicle to which pneumatic tire is mounted

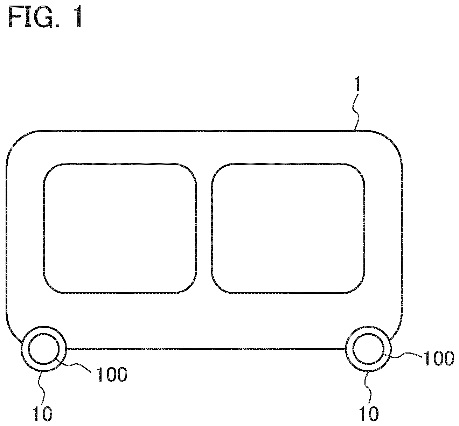

FIG. 1 is an overall schematic side view of the vehicle 1 to which the pneumatic tire 10 according to the present embodiment is mounted. As shown in FIG. 1, in this embodiment, the vehicle 1 is a four-wheel vehicle. The vehicle 1 is not limited to four wheels, but may have a six-wheel configuration or an eight-wheel configuration.

A predetermined number of pneumatic tire 10 are mounted on a vehicle 1 according to a wheel configuration. Specifically, in the vehicle 1, the pneumatic tire 10 assembled to a rim wheel 100 is mounted in a predetermined position.

The vehicle 1 belongs to a new small shuttle bus with an emphasis on transportation of people and goods in the city. In this embodiment, the new small shuttle bus is assumed to be a vehicle having a total length of 4 meters to 7 meters, a total width of about 2 meters, and a total vehicle weight of about 3 tons. However, the size and the gross vehicle weight are not necessarily limited to the range, and may be slightly out of the range.

The small shuttle bus is not necessarily limited to transportation of people, but may be used for transportation of goods, a mobile store, a mobile office, etc.

In addition, the small shuttle bus has a relatively low travel speed range (maximum speed: 70 km/h or less, average speed: approximately 50 km/h) because they are focused on transporting people and goods within the city. Therefore, hydroplaning countermeasures need not be emphasized.

In the present embodiment, it is assumed that the vehicle 1 is an electric vehicle having an automatic driving function (assume Level 4 or higher), but the automatic driving function is not essential and the vehicle 1 may not be an electric vehicle.

If the vehicle 1 is an electric vehicle, an in-wheel motor (unillustrated) is preferably used as a power unit. The in-wheel motor may be provided with the whole unit in the inner space of the rim wheel 100 or a part of the unit in the inner space of the rim wheel 100.

If an in-wheel motor is used, the vehicle 1 preferably has an independent steering function in which each wheel can steer independently. This makes it possible to turn and move in the lateral direction on the spot and eliminates the need for a power transmission mechanism, thereby improving the space efficiency of the vehicle 1.

Thus, in the vehicle 1, high space efficiency is required. For this reason, the pneumatic tire 10 preferably has a small diameter as small as possible.

On the other hand, a high load-carrying capacity (maximum load capacity) is required because it is mounted on the vehicle 1 having a gross vehicle weight corresponding to a vehicle size and an application.

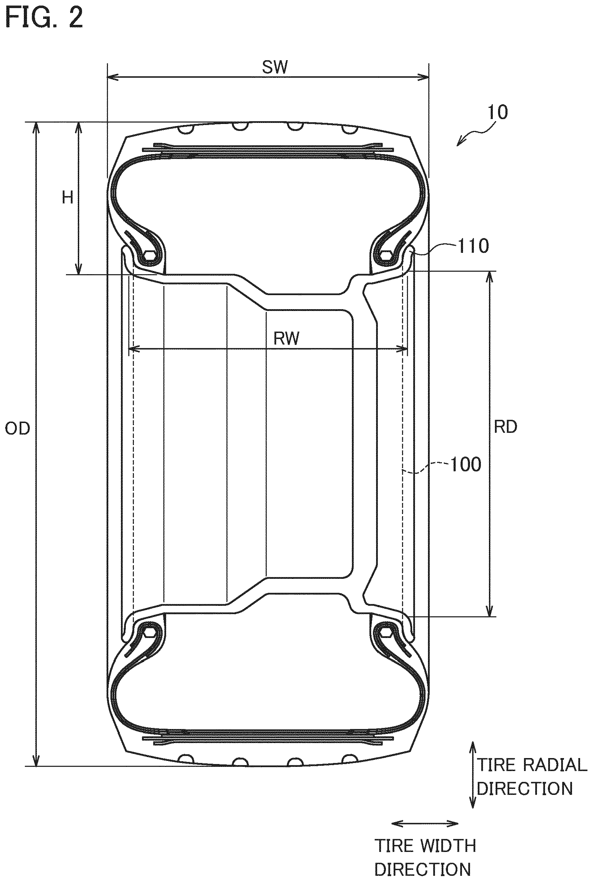

In order to satisfy such requirements, the pneumatic tire 10 has a load-carrying capacity corresponding to the total vehicle weight of the vehicle 1 while reducing the tire outer diameter OD (not shown in FIG. 1, see FIG. 2).

If the vehicle 1 has an in-wheel motor and an independent steering function, the pneumatic tire 10 is preferably low in aspect ratio from the viewpoint of improving responsiveness, and the rim diameter RD (not shown in FIG. 1, see FIG. 2) of the pneumatic tire 10 is preferably large in consideration of a housing space for an in-wheel motor or the like.

(2) Configuration of pneumatic tire

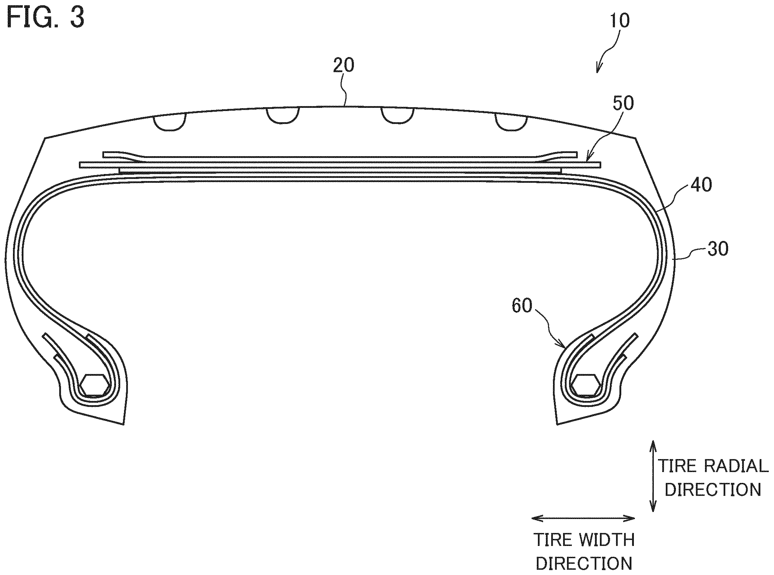

FIG. 2 is a cross-sectional view of the pneumatic tire 10 and the rim wheel 100. Specifically, FIG. 2 is a cross-sectional view along the tire width direction and the tire radial direction of a pneumatic tire 10 assembled to a rim wheel 100. In FIG. 2, the sectional hatching is not shown (the same as FIG. 3 and beyond).

The pneumatic tire 10 has a relatively small diameter while being wide. Specifically, the rim diameter RD of the rim wheel 100 is 12 inches or more and 17.5 inches or less.

As shown in FIG. 2, the rim diameter RD is the outer diameter of the rim body portion of the rim wheel 100 and does not include the portion of the rim flange 110.

The tire width SW of the pneumatic tire 10 is preferably 125 mm or more and 255 mm or less. As shown in FIG. 2, the tire width SW means a cross-sectional width of the pneumatic tire 10, and when the pneumatic tire 10 includes a rim guard (unillustrated), the rim guard portion is not included.

The aspect ratio of the pneumatic tire 10 is preferably 35% or more and 75% or less. The Aspect ratio is calculated using expression 1.

Aspect ratio (%) = tire section height H/tire width SW (section width) x 100                    (Expression 1)

The tire outer diameter OD of the pneumatic tire 10 is 350 mm or more and 600 mm or less. The tire outer diameter OD is preferably 500 mm or less.

When the tire outer diameter OD is such a size and the rim width RW is defined by the rim width of the rim wheel 100 assembled to the pneumatic tire 10 is, the pneumatic tire 10 satisfies the relationship of (Expression 2) and (Expression 3).

$$0.78 \le RW/SW \le 0.99 \ ... \ (Expression \ 2)$$

$$0.56 \leq RD/OD \leq 0.75 \; \ldots \; (Expression\ 3)$$

The pneumatic tire 10 preferably satisfies $0.78 \leqq RW/SW \leqq 0.98$, and more preferably $0.78 \leqq RW/SW \leqq 0.95$. The pneumatic tire 10 preferably satisfies $0.56 \leq RD/OD \leq 0.72$, and more preferably $0.56 \leq RD/OD \leq 0.71$.

The pneumatic tire 10 satisfying such a relationship can ensure an air volume necessary for supporting the gross vehicle weight of the vehicle 1 while having a small diameter. Specifically, an air volume of 20,000 cm$^3$ or more is required in consideration of load bearing performance. In addition, in order to save space, it is required to be 80,000 cm$^3$ or less.

If the above relationship is satisfied, the rim width RW is not particularly limited, but is preferably as wide as possible from the viewpoint of securing the air volume. For example, the rim width may be 3.8 to 7.8 J.

Also, from the viewpoint of securing the air volume, it is preferable that the ratio of the rim diameter RD to the tire outer diameter OD is small, that is, the aspect ratio is high. However, as described above, it is preferable that the aspect ratio is low from the viewpoint of responsiveness, and it is preferable that the rim diameter RD is large in consideration of the housing space such as the in-wheel motor, so that the aspect ratio and the rim diameter RD have a trade-off relationship between the air volume and the responsiveness as well as the housing space such as the in-wheel motor.

One example of a suitable size for the pneumatic tire 10 is 205/40 R 15. The suitable rim width is approximately 7.5 J. Other examples of suitable sizes include 215/45 R 12. In this case, the suitable rim width is approximately 7.0 J.

In addition, a set internal pressure (normal pressure) of the pneumatic tire 10 is 400 to 1,100 kPa, more particularly 500 ~ 900 kPa. The normal internal pressure is, for example, the air pressure corresponding to the maximum load capacity in the YearBook of JATMA (Japan Automobile Tire Manufacturers Association) in Japan, ETRTO in Europe, TRA in the United States, and other tire standards in each country.

In addition, the load to be borne by the pneumatic tire 10 is assumed to be 500 to 1,500 kgf (4.9kN to 14.7kN), and practically, about 900 kgf (8.8kN).

FIG. 3 is a sectional view of the sole pneumatic tire 10. Specifically, FIG. 3 is a cross-sectional view of pneumatic tire 10 taken along the tire width direction and the tire radial direction.

As shown in FIG. 3, the pneumatic tire 10 includes a tread 20, a tire side portion 30, a carcass 40, a belt layer 50 and a bead portion 60.

The tread 20 is a portion in contact with the road surface. On the tread 20, a pattern (unillustrated) corresponding to the use environment of the pneumatic tire 10 and the type of vehicle to be mounted is formed.

The tire side portion 30 is continuous with the tread 20 and positioned inside the tire radial direction of the tread 20. The tire side portion 30 is an area from the tire width direction outer end of the tread 20 to the upper end of the bead portion 60. The tire side portion 30 is sometimes referred to as a sidewall.

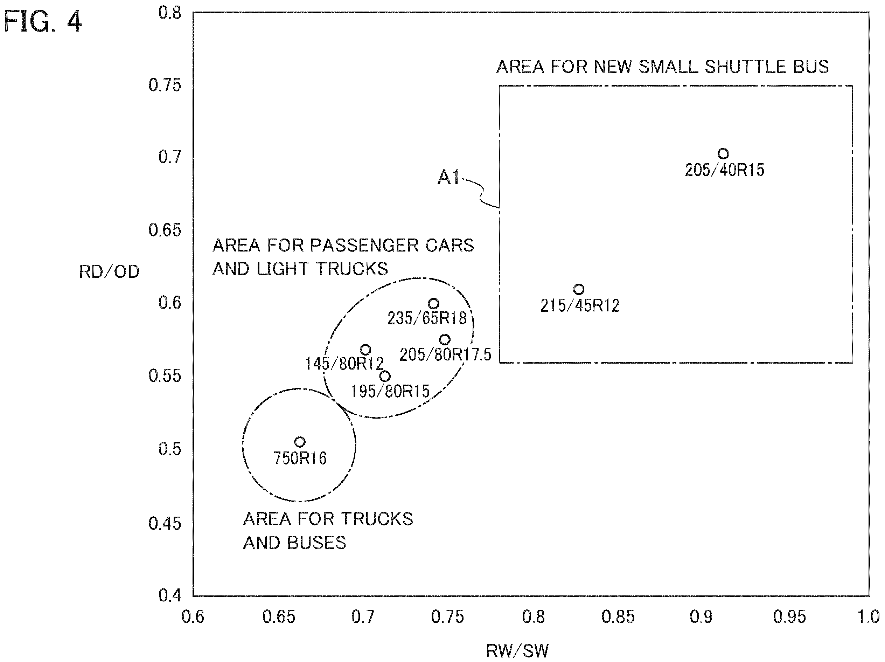

The carcass 40 is an annular member that forms a tire skeleton of the pneumatic tire 10. The carcass 40 has a radial structure in which a carcass cord 40 a (not shown in FIG. 3, see FIG. 4) arranged radially along the tire radial direction is covered with a rubber material. However, it is not limited to a radial structure, and may be a bias structure in which a carcass cords are arranged so as to cross each other in the tire radial direction.

The belt layer 50 is provided inside the tire radial direction of the tread 20. In this embodiment, the belt layer 50 has a 3-belt configuration, but may have a 4-belt configuration. Specifically, the belt layer 50 includes a pair of crossing belts with crossing cords. The configuration of the belt layer 50 is generally similar to that of an ordinary tire belt layer for trucks and buses.

The bead portion 60 continues to tire side portion 30 and is positioned inside in tire radial direction of tire side portion 30. The bead portion 60 is an annular shape extending to the tire circumferential direction, and the carcass 40 is folded from the inside of the tire width direction to the outside of the tire width direction via the bead portion 60.

The bead portion 60 may be provided with a bead filler outside the tire radial direction of a bead core, or may be provided with a chafer for preventing the carcass 40 or the like folded by the bead portion 60 from being rubbed and worn by the rim wheel 100.

(3) Function and effects

Next, the function and effects of the pneumatic tire 10 will be described. FIG. 4 shows a typical tire size positioning based on a combination of a tire shape (tire outer diameter OD and tire width SW) and a rim wheel shape (rim diameter RD and rim width RW).

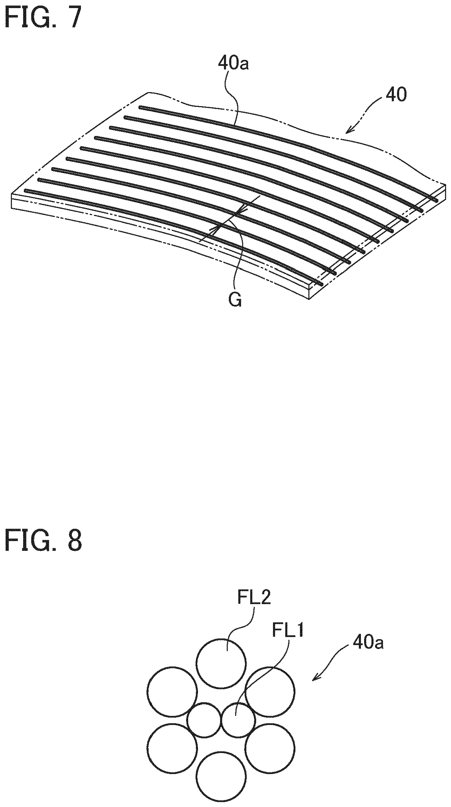

Specifically, the horizontal axis of the graph shown in FIG. 7 shows the ratio (RW/SW) of the rim width RW to the tire width SW, and the vertical axis shows the ratio (RD/OD) of the rim diameter RD to the tire outer diameter OD. In FIG. 7, typical tire size positions are plotted according to the values of RW/SW and RD/OD.

As shown in FIG. 7, the area of the track bus tire is low in both RW/SW and RD/OD. The area of tire for passenger cars or light trucks is higher than that of tire for trucks and buses for both RW/SW and RD/OD.

An example of a suitable size for the pneumatic tire 10 described above, 215/45 R 12, is included in area A1. As described above, the area A1 corresponds to $0.78 \leqq$ RW/SW $\leqq 0.99$, and $0.56 \leqq$ RD/OD $\leqq 0.75$. Such an area A1 is positioned as an area of the tire for the new small shuttle bus with an emphasis on transportation of people, goods and the like in the city, as in the aforementioned vehicle 1.

The RD/OD in the area of the tire for the new small shuttle bus is not significantly different from, and some overlap with, the RD/OD in the area of the tire for the passenger cars or light trucks. On the other hand, the RW/SW in the area of the tire for the new small shuttle bus is higher than the RW/SW in the area of the tire for passenger cars or light trucks.

As described above, the outer diameter OD of the pneumatic tire 10 is 350 mm or more and 600 mm or less. Therefore, the diameter is sufficiently small in comparison with the size of the vehicle 1, and can contribute to space saving of the vehicle 1.

Further, according to the pneumatic tire 10 having the size included in the area A1, since the relationship of $0.78 \leqq$ RW/SW $\leqq 0.99$ is satisfied, a wide rim width RW with respect to the tire width SW can be configured, that is, a wide tire can be configured, and it is easy to secure an air volume necessary for exhibiting high load capacity. If the rim width RW becomes too wide, the tire width SW also widens and space efficiency decreases, and the bead portion 60 tends to come off the rim wheel 100.

Further, according to the pneumatic tire 10 having the size included in the area A1, since the relationship of $0.56 \leqq$ RD/OD $\leqq 0.75$ is satisfied, the rim diameter RD with respect to the tire outer diameter OD is large, and it is easy to secure a housing space for an in-wheel motor or the like. When the rim diameter RD becomes too small, the diameter size of the disc brake or the drum brake becomes small. Therefore, the contact area of the effective brake becomes small, and it becomes difficult to secure the required braking performance.

That is, according to the pneumatic tire 10, when it is mounted on the new small shuttle bus or the like, it is possible to achieve a high space efficiency while having a higher load-carrying capacity.

The rim diameter RD of the pneumatic tire 10 is 12 inches or more and 17.5 inches or less. Thus, a necessary and sufficient air volume and a housing space for an in-wheel motor can be secured while maintaining a small diameter. Also, braking performance and traction performance can be secured.

The tire width SW of the pneumatic tire 10 is preferably 125 mm or more and 255 mm or less. The aspect ratio of the pneumatic tire 10 is preferably 35% or more and 75% or less. Thus, a necessary and sufficient air volume and a housing space for an in-wheel motor can be secured.

(4) Other embodiments

Although the contents of the present invention have been described above with reference to the examples, it will be obvious to those skilled in the art that the present invention is not limited to these descriptions and that various modifications and improvements are possible within the scope of the appended claims.

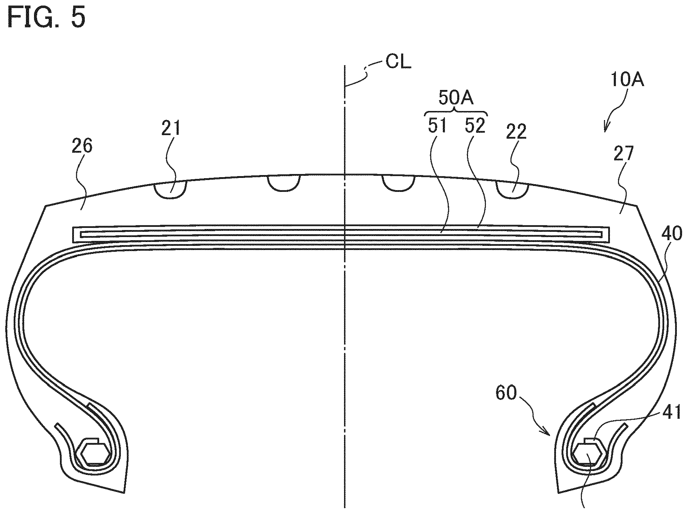

For example, the configuration of the pneumatic tire 10 may be changed as follows. FIG. 5 is a cross-sectional view of a pneumatic tire 10 A according to the modified example.

As shown in FIG. 5, pneumatic tire 10 A includes a belt layer 50 A. The belt layer 50 A comprises a core belt 51 and a sheath belt 52.

The core belt 51 is provided from one shoulder portion 26 of the tread 20 to the other shoulder portion 27 of the tread 20. The shoulder portion 26 is an area outside the tire width direction than a circumferential main groove 21, and the shoulder portion 27 is an area outside the tire width direction than a circumferential main groove 22. That is, the shoulder portion 26 and the shoulder portion 27 are areas outside the tire width direction than the circumferential main groove formed at the outermost tire width direction.

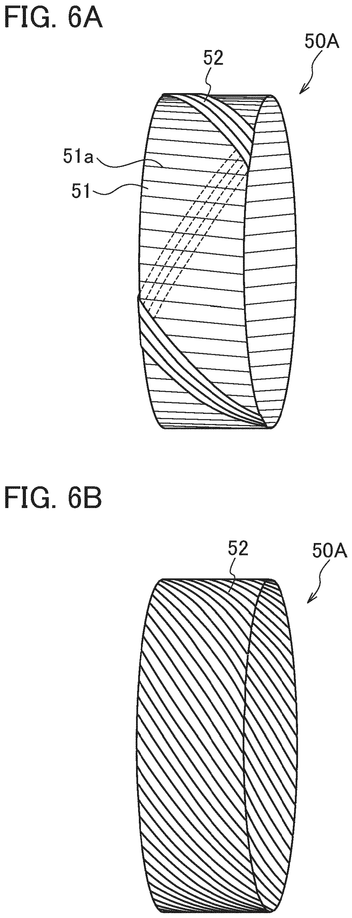

The core belt 51 is a belt formed by rubber coating a belt cord 51 a (not shown in FIG. 5, see FIG. 6A) inclined at a low angle with respect to the tire width direction. The sheath belt 52 is a tape-shaped belt including a cord and is wound over the entire circumference of the core belt 51. The sheath belt 52 provides similar functionality to a crossing belt layer.

The pneumatic tire 10 A is provided so that the folded end portion 41 of the carcass 40 folded at the bead portion 60 is wound along the bead core 61. The folded end portion 41 is in contact with outer end in the tire radial direction of the bead core 61. Although not shown in FIG. 5, a bead filler may be provided in the bead portion 60.

FIGs. 6A and 6B illustrate a configuration of the belt layer 50 A. Specifically, FIG. 6A is a perspective view of the belt layer 50 A during manufacturing, and FIG. 6B is a perspective view of the belt layer 50 A after manufacturing.

As shown in FIG. 6A, the core belt 51 has a belt cord 51 a disposed along the tire width direction. The core belt 51 is an annular belt formed by coating a plurality of belt cords 51 a with rubber.

As shown in FIG. 6A, the belt cord 51 a is preferably slightly inclined with respect to the tire width direction. Specifically, the belt cord 51 a is preferably inclined in the same direction as the inclination direction of the sheath belt 52 (up left in FIG. 6A).

The sheath belt 52 is a tape-like belt having a width of about 1 cm, and is spirally wound around the core belt 51 along the tire circumferential direction. Specifically, the sheath belt 52 is spirally wound around the core belt 51 along the tire circumferential direction at a predetermined distance equal to or greater than the width of the sheath belt 52.

The sheath belt 52 covers the tire radial direction outer surface of the core belt 51 and the tire radial direction inner surface of the core belt 51 by being wound around a plurality of laps in the tire circumferential direction so as not to overlap the adjacent sheath belt 52.

A longitudinal end (unillustrated) of the sheath belt 52 having a tape shape is wound around the core belt 51 so as not to be positioned in the shoulder portions 26, 27 and the center region (immediately below the tire equatorial line).

As shown in FIG. 6B, the sheath belt 52 is wound around the entire circumference of the annular core belt 51.

In this modified example, the belt layer 50 A comprises only the core belt 51 and the sheath belt 52. As noted above, the belt layer 50 A provides similar functionality to the crossing belt layer, but in this embodiment, no additional belts, such as a reinforcing belt, are provided in addition to the core belt 51 and the sheath belt 52.

The number of driving of the belt cords 51 a in the core belt 51 is preferably 15/50 mm or more and 30/50 mm or less. The number of cords in the sheath belt 52 is preferably 10/50 mm or more and 25/50 mm or less. The number of the belt cords 51 a to be driven is preferably larger (that is, dense) than the number of cords to be driven in the sheath belt 52.

The angle between the belt cord 51 a and the tire width direction is preferably not less than 20 degrees and not more than 60 degrees. The angle formed by the cord of the sheath belt 52 with the tire width direction is preferably 50 degrees or more and 80 degrees or less. The angle formed by the cord of the sheath belt 52 with the tire width direction is preferably larger than the angle formed by the belt cord 51 a with the tire width direction.

The number of turns of the sheath belt 52 in the tire circumferential direction is preferably 3 times or more and 6 times or less in consideration of securing performance and productivity.

FIG. 7 is a partial perspective view of the carcass 40. As shown in FIG. 7, the carcass 40 has the carcass cord 40 a disposed along the tire width direction.

Specifically, the plurality of carcass cords 40 a disposed along the tire width direction are covered with a rubber material.

The carcass cord 40 a is formed by twisting a metal filament. Specifically, the carcass cord 40 a is formed of a steel filament.

FIG. 8 schematically shows a cross-sectional shape of the carcass cord 40 a. As shown in FIG. 8, the carcass cord 40 a is formed by twisting a plurality of filaments FL1 and a plurality of filaments FL2. Specifically, the carcass cord 40 a is formed by two filaments FL1 and six filaments FL2.

The carcass cord 40 a has an outer diameter smaller than that of a general carcass cord so as to easily follow the shape of the bead portion 60 of the pneumatic tire 10 having a small diameter. Specifically, the outer diameter of the carcass cord 40 a is 0.7 mm or less. The outer diameter of the carcass cord 40 a is preferably 0.6 mm or less.

The outer diameters of the filaments FL1 and FL2 forming the carcass cord 40 a are preferably 0.2 mm or less.

In this embodiment, the outer diameter of the filament FL1 is 0.15 mm and the outer diameter of the filament FL2 is 0.175 mm.

The distance G (see Fig. 7) between adjacent carcass cords 40 a is 4.0 mm or less. Specifically, the distance G is a distance between outer peripheral surfaces of adjacent carcass cords 40 a in the tire circumferential direction.

The distance G is more preferably 3.5 mm or less, and more preferably 3.0 mm or less. The distance G is preferably 0.5 mm or more, more preferably 1.0 mm or more, and more preferably 1.5 mm or more. The distance G is a distance between adjacent carcass cords 40 a immediately below the tire equatorial line CL (see Fig. 5).

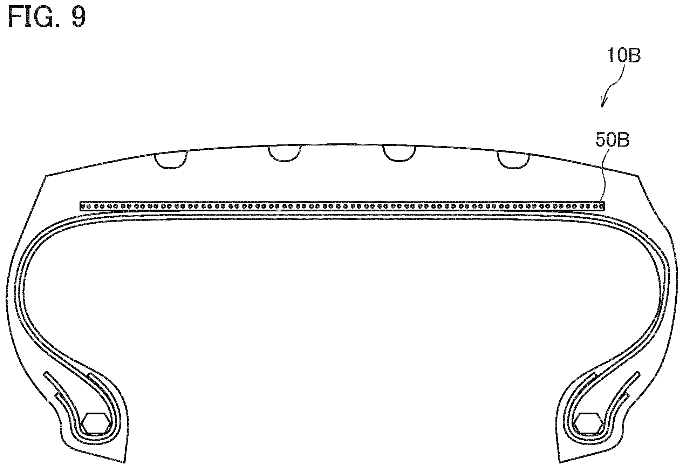

FIG. 9 is a cross-sectional view of a pneumatic tire 10 B according to another modified example. As shown in FIG. 9, the pneumatic tire 10 B includes a belt layer 50 B. The belt layer 50 B is a spiral belt formed by winding a resin coated cord coated with a resin material along the tire circumferential direction.

Like the pneumatic tire 10 A and the pneumatic tire 10 B, the configuration of the belt layer and the shape of the folded end portion 41 of the carcass 40 may be appropriately changed in accordance with the characteristics of the vehicle 1..

While embodiments of the invention have been described as above, it should not be understood that the statements and drawings relating to those embodiments are intended to limit the invention. Various alternative embodiments, examples and operating techniques will become apparent to those skilled in the art from this disclosure within the scope of the appended claims.

[Reference Signs List]

1 Vehicles
10, 10 A, 10 B Pneumatic tire
20 Tread
21, 22 Circumferential main grooves
26, 27 Shoulder portions
30 Tire side portion
40 Carcass
40 a Carcass cord
41 folded end portion
50 , 50 A , 50 B Belt layers
51 Core belt
51 a Belt cord
52 Sheath belt
60 Bead portion
61 Bead core
100 Rim wheel
110 Rim flange

**Claims**

1. A pneumatic tire (10) mounted to a vehicle (1) and a rim wheel (100) assembled to the pneumatic tire (10), wherein

   OD is defined by an outer diameter of the pneumatic tire (10);
   RW is defined by a rim width of the rim wheel (100) assembled to the pneumatic tire (10);
   SW is defined by a tire width of the pneumatic tire (10); and
   RD is defined by a rim diameter of the pneumatic tire (10), wherein
   the OD is 350 mm or more and 600 mm or less;
   the relation of $0.78 \leq RW/SW \leq 0.99$; and
   the relation of $0.56 \leq RD/OD \leq 0.75$ are satisfied,
   wherein the RD is 12 inches (305 mm) or more and 17.5 inches (445 mm) or less,
   **characterized in that** the tire has an air volume of 20,000 cm$^3$ or more and 80,000 cm$^3$ or less, and
   **in that** the set internal pressure of the pneumatic tire (10) is 500 to 900 kPa.

2. The pneumatic tire according to claim 1, wherein the SW is not less than 125 mm and not more than 255 mm.

3. The pneumatic tire according claim 1 or 2, wherein an aspect ratio of the pneumatic tire is not less than 35% and not more than 75%.

**Patentansprüche**

1. Luftreifen (10), der an einem Fahrzeug (1) montiert ist und ein Felgenrad (100), das mit dem Luftreifen (10) zusammengefügt ist, wobei

   OD durch einen äußeren Durchmesser des Luftreifens (10) definiert ist;
   RW durch eine Felgenbreite des Felgenrads (100) definiert ist, das mit dem Luftreifen (10) zusammengefügt ist;
   SW durch eine Reifenbreite des Luftreifens (10) definiert ist; und
   RD durch einen Felgendurchmesser des Luftreifens (10) definiert ist, wobei
   der OD 350 mm oder mehr und 600 mm oder weniger beträgt;
   die Beziehung von $0,78 \leq RW/SW \leq 0,99$; und
   die Beziehung von $0,56 \leq RD/OD \leq 0,75$ erfüllt sind,
   wobei der RD 12 Zoll (305 mm) oder mehr und 17,5 Zoll (445 mm) oder weniger beträgt, **dadurch gekennzeichnet, dass**
   der Reifen ein Luftvolumen von 20 000 cm$^3$ oder mehr und 80 000 cm$^3$ oder weniger aufweist, und
   dadurch, dass der eingestellte innere Druck des Luftreifens (10) 500 bis 900 kPa beträgt.

2. Luftreifen nach Anspruch 1, wobei die SW nicht weniger als 125 mm und nicht mehr als 255 mm beträgt.

3. Luftreifen nach Anspruch 1 oder 2, wobei ein Aspektverhältnis des Luftreifens nicht weniger als 35 % und nicht mehr als 75 % beträgt.

**Revendications**

1. Bandage pneumatique (10) monté sur un véhicule (1) et une jante de roue (100) assemblée au bandage pneumatique (10), dans lequel

   OD est défini par un diamètre extérieur du bandage pneumatique (10) ;
   RW est défini par une largeur de la jante de roue (100) assemblée au bandage pneumatique (10) ;
   SW est défini par une largeur de pneumatique du bandage pneumatique (10) ;
   RD est défini par un diamètre de jante du bandage pneumatique (10) ; dans lequel
   le OD est supérieur ou égal à 350 mm et inférieur ou égal à 600 mm ;
   la relation de $0,78 \leq RW/SW \leq 0,99$ ; et
   la relation de $0,56 \leq RD/OD \leq 0,75$ sont satisfaites,
   dans lequel le RD est supérieur ou égal à 12 pouces (305 mm) et inférieur ou égal à 17,5 pouces (445 mm), **caractérisé en ce que**
   le pneumatique a un volume d'air supérieur ou égal à 20 000 $cm^3$ et inférieur ou égal à 80 000 $cm^3$, et
   **en ce que** la pression interne réglée du bandage pneumatique (10) est comprise entre 500 et 900 kPa.

2. Bandage pneumatique selon la revendication 1, dans lequel le SW n'est pas inférieur à 125 mm et n'est pas supérieur à 255 mm.

3. Bandage pneumatique selon la revendication 1 ou la revendication 2, dans lequel un rapport d'aspect du bandage pneumatique est supérieur ou égal à 35 % et inférieur ou égal à 75 %.

FIG. 1

# FIG. 2

TIRE RADIAL
DIRECTION

TIRE WIDTH
DIRECTION

FIG. 3

FIG. 4

EP 3 882 049 B1

FIG. 5

## FIG. 6A

## FIG. 6B

**FIG. 7**

**FIG. 8**

## FIG. 9

**EP 3 882 049 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001050126 A1

- JP 2018138435 A